# EUROPEAN PATENT APPLICATION

(11) **EP 1 346 787 A1**
(43) Date of publication of application: **24.09.2003**
(21) Application number: 03445027.0
(22) Date of filing: 27.02.2003
(51) Int. Cl.: B23B 31/11, B23B 31/20, B23B 31/00

(54) **Rotary tool and cutting part comprised in the tool**

(30) Priority: 21.03.2002 SE 0200852
(71) Applicant: Sandvik AB, 811 81 Sandviken (SE)
(72) Inventor: Kakai, Isak, 803 24 Gävle (SE); Wallström, Lars-Gunnar, 811 52 Sanviken (SE)

(57) **Abstract**

The present invention relates to a rotary tool for chip removing machining, for example a milling cutter or a drill, the tool comprising a shaft, a conical seating (10) arranged in the shaft (1), which seating is situated in connection to one end of the shaft (1), a holder (3) having an externally generally conical portion, a cutting part (5), the holder (3) having members (14) for receipt of the cutting part (5), as well as members (9, 11) in order to apply a force on the holder (3) in the axial direction of the shaft (1). Separately, the invention also relates to a cutting part (5).

The tool according to the present invention is characterized in that the holder (3) has a slightly conical recess (14), that the cross-section dimension of the recess (14) decreases in the direction of the open end of the recess (14), that the cutting part (5) has a slightly conical pin (20), which is designed to be received in the recess (14), that the cross-section dimension of the pin (20) increases in the direction of the free end of the pin (20), and that the recess (14) has a flexible shape.

## Description

### Technical Field of the Invention

The present invention relates to a rotary tool, especially for chip removing machining, the tool, for instance, consisting of a milling cutter or a drill and comprising a shaft, a conical seating arranged in the shaft, which seating is situated in connection to one end of the shaft, a holder having an externally generally conical portion, a cutting part, the holder having members for receipt of the cutting part, as well as members in order to apply a force on the holder in the axial direction of the shaft. Separately, the invention also relates to a cutting part that constitutes a replaceable part of the tool according to the present invention.

### Background Art

A modular milling system is previously known from the company SILMAX, which system is marketed under the trademark SHUTTLE SYSTEM. The system comprises a spindle, which has an axial through hole, in which a drawbar is arranged. The drawbar is provided with an externally threaded portion at one end thereof, which is designed to interact with an internally threaded, axially slotted sleeve that is externally conical. On mutual rotation of the drawbar and the slotted sleeve, the same will be displaced axially in relation to each other. On the outside thereof, the slotted sleeve interacts with a conical seating. In addition, the slotted sleeve has an internal, generally cylindrical part that is designed to interact with a cylindrical pin of a replaceable cutter head that is part of the milling system. This replaceable cutter head is preferably made of solid cemented carbide. When the slotted sleeve is displaced axially in the conical seating thereof, the sleeve will be pressed around the pin of the cylindrical cutter head, whereby the cutter head becomes fixed in the spindle. In that connection, it should be noted that on clamping the cutter head in the slotted sleeve, interaction between cylindrical surfaces takes place.

A tool is previously known from EP 0 776 719 A1, which tool has a replaceable cutting head, the cutting head being provided with a shoulder, a conical part as well as a male part that is designed to form part of a type of dovetail coupling. A shank of the tool has a stop face, a conical seating and an internal thread, which interacts with an external thread of a holder, which furthermore has a female part that is designed to be integral with the dovetail coupling. On mounting of the cutting head, the same is rotated, preferably by means of a key, the shoulder of the cutting head coming in abutment with the stop face of the shaft in the main at the same time as the cone-shaped part of the cutting head comes into abutment with the conical seating of the shaft. The problem is that the tolerances do not permit that this be carried out exactly simultaneously, which means that either abutment will occur between shoulder and stop face or between conical part and conical seating.

### Aims and Features of the Invention

A primary aim of the present invention is to provide a rotary tool of the kind defined in the introduction, which has a good stability despite the cutter head being dismountable.

Yet another aim of the present invention is that the rotary tool should maintain acceptable tolerances as for the chip removing machining carried out by means of the rotary tool according to the present invention.

Another aim of the present invention is that according to a preferred embodiment the members for fixation of the dismountable cutter head should have, relatively seen, a short extension in the axial direction of the tool.

At least the primary aim is realised by means of a rotatable tool having the features defined in the subsequent independent claim 1. Preferred embodiments of the invention are defined in the dependent claims.

### Brief Description of the Drawings

Two embodiments of the invention will be described below with reference being made to the appended drawings, where:
- Fig 1: shows an exploded view of the components of which the tool is composed, where a shaft comprised in the tool is sectioned in the longitudinal direction thereof;
- Fig 2: shows a perspective view obliquely from below of a cutting part which forms part of the tool according to Fig 1;
- Fig 3: shows a perspective view obliquely from above of a holder, which forms part of the tool according to Fig 1;
- Fig 4: shows in an exploded view a longitudinal section through the tool according to Fig 1;
- Fig 5: shows a longitudinal section through the tool according to Fig 1 when the various components of the tool are assembled, i.e. the tool is ready to be used;
- Fig 6: shows a longitudinal section through an alternative embodiment of the tool according to the present invention;
- Fig 7: shows an alternative embodiment of a cutting part which is included in the tool according to the present invention; and
- Fig 8: shows an alternative embodiment of a holder that fits to the cutting part according to Fig 7 and is included in the tool according to the present invention.

### Detailed Description of Preferred Embodiments of the Invention

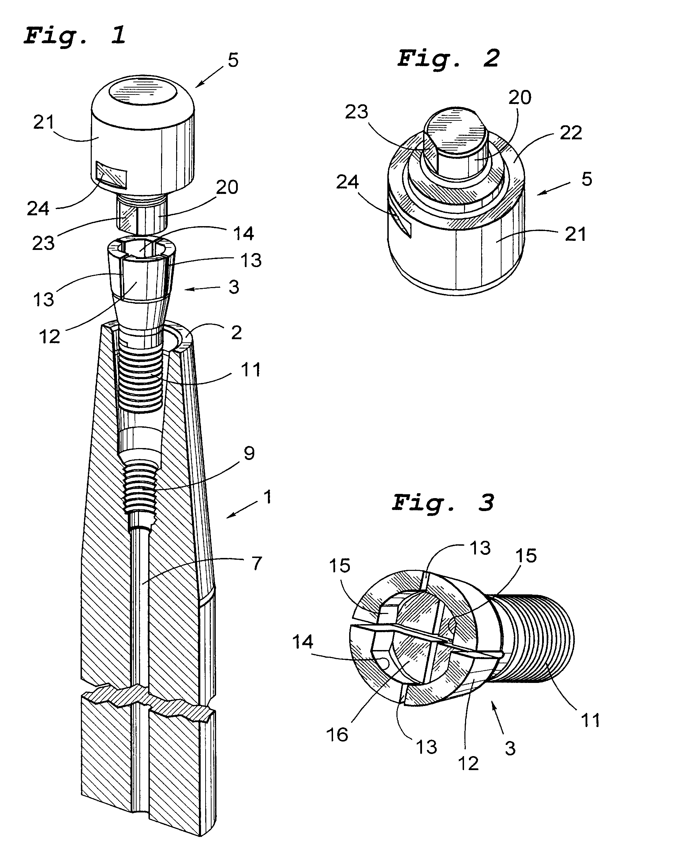

The rotary tool for chip removing machining according to the present invention shown in Figs 1, 4 and 5 comprises a shaft 1, a holder 3 as well as a cutting part 5. The shaft 1 has an end face 2. The upper portion of the cutting part 5 is only shown schematically, i.e. cutting edges, chip channels and the like are not illustrated.

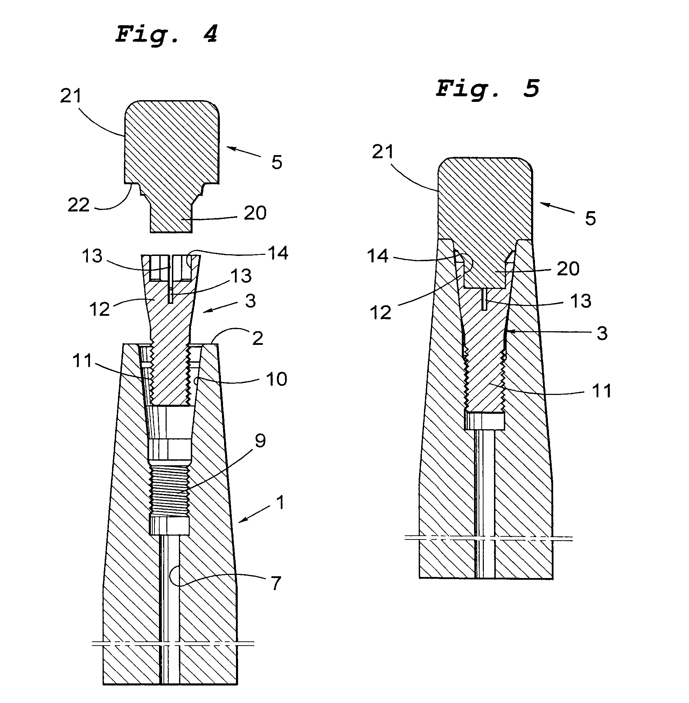

The shaft 1 is provided with a through hole 7 extending axially. As is most clearly seen in Fig 4, at the end that will receive the holder 3 and the cutting part 5, the shaft 1 is provided with an internal thread 9 as well as a cone-shaped seating 10 situated outside of this thread 9. The internal thread 9 is situated directly adjacent to the through hole 7.

The holder 3 has an externally threaded portion 11 as well as a fixing portion 12, which has four slots 13 extending axially, which slots end approximately at half the height of the holder 3. The fixing portion 12 is generally cone-shaped at the outside thereof, whereby the external cross-section dimension of the fixing portion 12 increases in the direction from the externally threaded portion 11. Inside the fixing portion 12, a generally slightly conical recess 14 is arranged, the recess 14 having a decreasing cross-section dimension in the direction of the open end of the recess 14. In addition, the recess 14 has two opposite first planar surfaces 15, which converge slightly towards each other in the direction of the open end of the recess 14. The slots 13 have an axial extension past the bottom 16 of the recess 14, see Fig 4.

The cutting part 5 has a pin 20 and a head 21, something, which is just schematically shown, i.e. cutting edges and other components included in the cutting geometry are omitted. In the transition between the pin 20 and the head 21, the cutting part 5 is provided with an annular shoulder 22, which in the mounted position will get into abutment with an end face 2 of the shaft 1.

The pin 20 included in the cutting part 5 is generally slightly conical, having an increasing cross-section dimension in the area of the free end of the pin 20. The conicity of the pin 20 is adapted to the conicity of the recess 14, this being explained in more detail in connection with the description below as to how the components of which the tool according to the present invention is built up interact. The pin 20 also has two diametrically located second planar surfaces 23, which diverge slightly towards each other in the direction of the head 21.

The cutting part 5 also has a key recess 24, by means of which the cutting part 5 may be brought to rotate.

In Figs 1 and 4, exploded views of the components included in the tool according to the present invention are shown. These components are to be connected mutually in such a way that the tool shown in Fig 5 is obtained. In order to effect this, the pin 20 of the cutting part 5 is pushed into the slotted fixing portion 12 of the holder 3. In that connection, the second planar surfaces 23 of the pin 20 are brought to be located exactly opposite the first planar surfaces 15 of the recess 14. This is necessary in order to enable the pin 20 to be pushed into the recess 14. At this stage the fixing portion 12 is unloaded, something which also is a prerequisite in order to enable the pin 20 to be pushed into the recess 14.

The conicity of the pin 20 is adapted to the conicity of the recess 14, whereby an important objective is to attain the best possible agreement of the conicities when the components are fully connected with each other, which is shown in Fig 5.

After that the pin 20 of the cutting part 5 has been pushed into the recess 14, the externally threaded portion 11 of the holder 3 is inserted into the shaft 1 and the externally threaded portion 11 is brought to engagement with the internal thread 9. This is achieved by rotating the cutting part 5 and the holder 3, which is accomplished pressing a key (not shown) into the key recess 24 of the head 21 of the cutting part 5. On rotation of the cutting part 5, the holder 3 is driven due to the fact that the planar surfaces 15 and 23 of the recess 14 and the pin 20, respectively, interact.

When the externally threaded portion 11 has reached a distance into the internal thread 9, the cone-shaped, external part of the fixing portion 12 will come into contact with the cone-shaped seating 10 of the shaft 1. On continued displacement axially inwards in the shaft 1 of the holder 3 and the cutting part 5, the fixing portion 12 of the holder 3 will become somewhat deformed since this portion is provided with axially extending slots 13. The deformation is effected by the contact between the cone-shaped seating 10 and the cone-shaped, external part of the fixing portion 12.

On continued rotation of the cutting part 5, a closer contact will be established between the cone-shaped seating 10 and the cone-shaped, external part of the fixing portion 12. In that connection, the deformation will progress and the fixing portion 12 will be pressed around the pin 20, something which is made possible by virtue of the presence of the axially extending slots 13. When the cutting part 5 is finally mounted in the shaft 1, the shoulder 22 of the head 21 will come to abutment with the end face 2 of the shaft 1. Thereby, an exceptionally safe mounting of the cutting part 5 in the shaft 1 is obtained, the joint between the cutting part 5 and the shaft 1 in a satisfactory way carrying the loads that the cutting part 5 is subjected to, for instance bending loads. In the final position of the holder 3 inside the shaft 1, see Fig 5, the pin 20 is fixed inside the recess 14, whereby the conicity of the pin 20 should correspond to the conicity of the recess 14.

When a cutting part 5 of the tool according to the present invention is worn out, the same is dismounted in the opposite way as a cutting part 5 is mounted. In that connection, by means of the key, the cutting part 5 is rotated in the opposite direction in comparison to that used when mounting the cutting part, the holder 3 being conveyed and the externally threaded portion 11 being threaded out of the internal thread 9. When the worn out cutting part 5, together with the holder 3, has been removed from the shaft 1, the cutting part 5 can be removed from the holder 3. After that, a new fresh cutting part 5 is attached in the holder 3 by the pin 20 being pushed into the recess 14 of the holder 3 in the way that has been described above. The mounting of the cutting part 5, together with the holder 3, now continues in a corresponding way as has been described above.

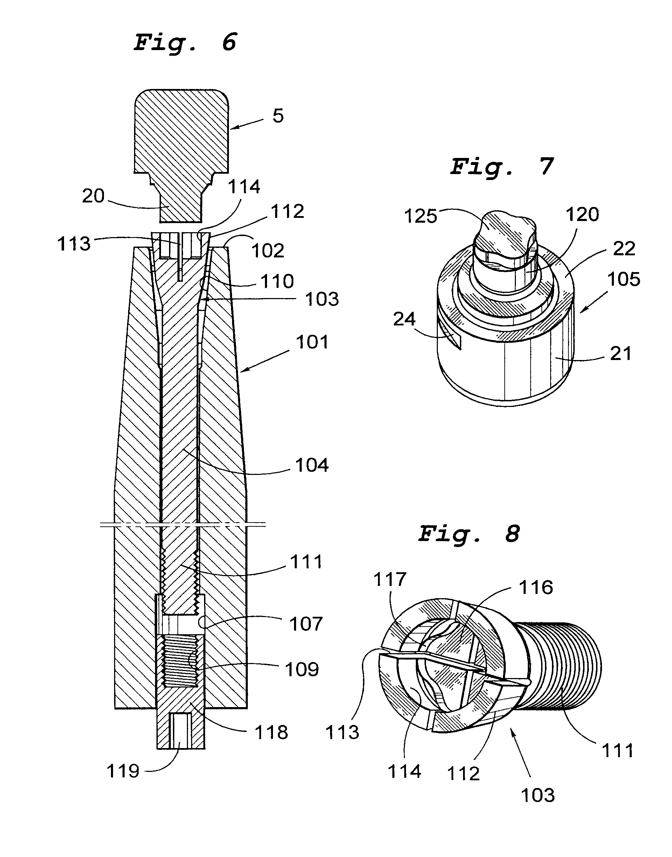

In Fig 6, a longitudinal section through a tool according to the present invention is shown. Principally, the tool according to Fig 6 differs from the tool according to Figs 1, 4 and 5 by the holder 103 being integrated with a drawbar 104, which has an externally threaded portion 111 at the end turned from the holder 103. A through hole 107 is arranged in the shaft 101, in which hole the drawbar 104 is housed, a sleeve 118, which is provided with an internal thread 109, being arranged in the through hole 107. The sleeve 118 also has a key recess 119 at the end turned from the thread 109. This internal thread 109 is designed to interact with the externally threaded portion 111 of the drawbar 104 by sleeve 118 being rotated, preferably by means of a hex socket wrench that is applied into the key recess 119. In that connection, the drawbar with the fixing portion 112 thereof will move axially such that a corresponding interaction as in the above-described embodiment arises.

Regarding the fixing portion 112 of the holder 103 in the embodiment according to Fig 6, it is formed in a principally equivalent way as the fixing portion 12, i.e. it is provided with axially extending slots 113 as well as a conical recess 114.

The cutting part 5 shown in Fig 6 is identical with the cutting part 5 in the above-described embodiment. This implies that the pin 20 of the cutting part 5 interacts with the recess 114 on mounting of the cutting part 5 in a principally corresponding way as has been described above in connection with the embodiment according to Figs 1, 4 and 5. The corresponding applies when a worn out cutting part 5 is to be dismounted in the tool according to Fig 6.

In Fig 7, an alternative embodiment of a cutting part 105 included in the tool according to the present invention is shown, this cutting part 105 primarily differing from the above-described cutting part 5 by the design of the pin 120, i.e. the head 21 of the cutting part 105 may be identical with the head 21 of the cutting part 5. In a corresponding way as in the cutting part 5, the pin 120 of the cutting part 105 is slightly conical, however it does not have any planar surfaces in the conical envelope surface. The pin 120 has a quadrangle 125 at the free end thereof, which in the embodiment illustrated has rounded corners. The cross-section dimension of the quadrangle 125 between diametrically situated corners substantially equals the diameter of the pin 120 at the free end thereof, i.e. where the quadrangle 125 connects to the pin 120. Preferably, the quadrangle 125 is formed integrally with the pin 120. In the embodiment illustrated, the quadrangle 125 is of an essentially lesser axial extension than the pin 120.

In Fig 8, an alternative embodiment of a holder 103 included in the tool according to the present invention is shown, said holder 103 primarily differing from the above-described holder 3 by the design of the recess 114 of the fixing portion 112, i.e. the externally threaded portion 11 of the holder 103 may be identical with the externally threaded portion 11 of the holder 3.

The recess 114 has a bottom 116 that has a border 117 running around the circumference, which border in planar view of the bottom 116 has a quadrangular shape that equals the circumference of the quadrangle 125. In general, the border 117 and the quadrangle 125 have a substantially similar axial extension.
When the pin 120 of the cutting part 105 is pushed into the recess 114, it should be ensured that the quadrangle 125 fits shapeless into the gap that is defined by the border 117. After that, the cutting part 105 and the holder 103 are mounted in a shaft, which may be identical with the shaft 1 according to Figs 1, 4 and 5. When the cutting part 105 is rotated, the holder 103 is conveyed due to the fact that the quadrangle 125 interacts with the border 117. As regards the clamping of the pin 120 in the recess 114, it is carried out in principally the corresponding way as in the above-described embodiment. Dismounting of the cutting part 105 is also carried out in principally the corresponding way as in the above-described embodiment.

For both of the above-described embodiments, the term "slightly conical" has been applied concerning the conicity of both the recess 14; 114 and the pin 20; 120. By this term, it should be appreciated a cone angle that is larger than 0° and less than or equal to 5°.

### Feasible Modifications of the Invention

In the above-described embodiments, the fixing portion 12; 112 of the holder 3; 103 is provided with four axially extending slots 13; 113. Within the scope of the present invention, it is, however, conceivable that the fixing portion is provided with fewer slots than four as well as more slots than four.

In the above-described embodiment of the cutting part 105 according to Fig 7 and the holder 103 according to Fig 8, the cutting part 105 has a quadrangle 125 and the recess 114 has a quadrangular border 117 adapted to the quadrangle. However, within the scope of the present invention also other geometrical shapes of the element arranged at the free end of the pin and the border adapted to this element are conceivable. With an exemplifying and not limiting view, a triangle, a pentagon or a hexagon can be mentioned. In this connection, it is however important that the pin can easily be mounted in the recess so that a satisfactory engagement occurs, which engagement guarantees mutual conveyance between the cutting part and the holder.

In the above-described embodiments of a tool for chip removing machining, the shaft 1; 101 has a through hole 7; 107, which is designed to be used as a cooling duct. However, within the scope of the present invention it is also conceivable that the hole 7; 107 be omitted and that cooling is achieved in another way.

In the above-described embodiments, the holder 3, 103 is made in one piece. However, within the scope of the present invention it is also conceivable that the fixing portion 12; 112, for instance, is made out of cemented carbide while the rest of the holder 3; 103 is made out of steel.

### List of Reference Designations

- 1; 101: Shaft
- 2; 102: End face
- 3; 103: Holder
- 104: Drawbar
- 5; 105: Cutting part
- 7; 107: Through hole
- 9; 109: Internal thread
- 10; 110: Conical seating
- 11; 111: Externally threaded portion
- 12; 112: Fixing portion
- 13; 113: Slots
- 14; 114: Recess
- 15: First planar surfaces
- 16; 116: Bottom
- 117: Border
- 20; 120: Conical pin
- 21: Head
- 22: Shoulder
- 23: Second planar surfaces
- 24: Key recess
- 125: Quadrangle

## Claims

1. Rotary tool, for chip removing machining, the tool, for example, consisting of a milling cutter or a drill and comprising a shaft (1; 101), a conical seating arranged (10; 110) in the shaft (1; 101), which seating is situated in connection to one end of the shaft (1; 101), a holder (3; 103) having an externally generally conical portion, a cutting part (5; 105), the holder (3) having members (14; 114) for receipt of the cutting part (5; 105), as well as members (9, 11; 109, 111) in order to apply a force on the holder (3; 103) in the axial direction of the shaft (1; 101), characterize dinthat the holder (3; 103) has a slightly conical recess (14; 114), that the cross-section dimension of the recess (14; 114) decreases in the direction of the open end of the recess (14; 114), that the cutting part (5; 105) has a slightly conical pin (20; 120), which is designed to be received in the recess (14; 114), that the cross-section dimension of the pin (20; 120) increases in the direction of the free end of the pin (20; 120), and that the recess (14; 114) has a flexible shape.

2. Tool according to claim 1, **characterized in that** the flexible shape of the recess (14; 114) is attained by the fact that the holder (3; 103) has axial slots (13; 113) in connection to the recess (14; 114), and that the slots (13; 113) break through the limiting surfaces of the recess (14; 114).

3. Tool according to claim 1 or 2, **characterized in that** the recess (14; 114) and the pin (20; 120), respectively, have members (15, 23; 117, 125) for mutual driving.

4. Tool according to claim 3, **characterized in that** the recess (14) and the pin (20), respectively, have diametrically arranged planar surfaces (15 and 23, respectively).

5. Tool according to claim 3, **characterized in that** the recess (114) has a quadrangular border (117) in planar view, and that the pin (120) at the free end thereof has a quadrangle (125), which shapewise fits inside the border (117).

6. Tool according to any one or several of the preceding claims, **characterized in that** the holder (3) has a threaded portion (11), and that the shaft has a thread (9), which is designed to interact with the threaded portion (11).

7. Tool according to any one or several of the preceding claims, **characterized in that** the holder (103) is formed integrally with a drawbar (104), which has a threaded portion (111) at the end turned from the holder (103), and that the shaft (101) has an internal thread (109), which is designed to interact with the threaded portion (111).

8. Tool according to any one or several of the preceding claims, **characterized in that** the cutting part (5; 105) has an annular shoulder (22), which in the active position is designed to abut against an end face (2; 102) of the shaft (1; 101).

9. Cutting part (5; 105), which comprises a head (21) having members for chip removing machining, the cutting part (5; 105) being designed to be part of a tool for chip removing machining, **characterized in that** the cutting part (5; 105) has a slightly conical pin (20; 120), which has an increasing cross-section dimension in the direction of the free end thereof, and that the cutting part (5; 105) has an annular shoulder (22).

10. Cutting part (5; 105) according to claim 9, **characterized in that** the shoulder (22) is arranged on the head (21), at the connection thereof to the pin (20; 120).
